## Europäisches Patentamt
## European Patent Office
## Office européen des brevets

Veröffentlichungsnummer: **0 279 336**
**A1**

# EUROPÄISCHE PATENTANMELDUNG

Anmeldenummer: **88101915.2**

Anmeldetag: **10.02.88**

Int. Cl.⁴: **G11B 7/08** , G11B 7/09

Priorität: **14.02.87 DE 3704718**

Veröffentlichungstag der Anmeldung:
**24.08.88 Patentblatt 88/34**

Benannte Vertragsstaaten:
**ES**

Anmelder: **Deutsche Thomson-Brandt GmbH**
**Hermann-Schwer-Strasse 3 Postfach 1307**
**D-7730 Villingen-Schwenningen(DE)**

Erfinder: **Kurz, Arthur**
**Ludwigsburgerstrasse 26**
**D-7500 Karlsruhe 41(DE)**
Erfinder: **Uhde, Dietmar**
**Lucian-Reich-Strasse 1a**
**D-7730 Villingen-Schwenningen(DE)**

## Gerät zur Wiedergabe von Daten.

Bei einem Gerät zur Wiedergabe von Daten werden die Daten mittels eines optischen Abtastsystems durch Führen eines Lichtstrahls entlang den Datenspuren eines sich drehenden plattenförmigen Aufzeichnungsträgers gelesen und in einem Decodierer decodiert, der bei jedem Bitfehler einen Impuls abgibt. Die Bitfehlerrate hängt unter anderem davon ab, unter welchem Winkel der Lichtstrahl in tangentialer Richtung gesehen auf den Aufzeichnungsträger fällt. Weil dieser Winkel, der Tangentialwinkel, fest eingestellt ist, ist er nicht für alle Abtastpunkte optimal.

Um die Bitfehlerrate zu verringern, wird aus ihr ein Steuersignal für ein Stellglied (F1, F2) abgeleitet, mittels dem der Tangentialwinkel solange verändert wird, bis die Bitfehlerrate unter einen vorgebbaren Schwellwert absinkt.

Anwendbar in CD-Spieler, Videoplattenspieler, magneto-optische Geräte und Draw-Disc-Spieler

EP 0 279 336 A1

## Gerät zur Wiedergabe von Daten

Die Erfindung betrifft ein Gerät zur Wiedergabe und gegebenenfalls auch Aufzeichnung von Daten, die mittels eines optischen Abtastsystems durch Führen eines Lichtstrahls entlang den Datenspuren eines sich drehenden plattenförmigen Aufzeichnungsträgers gelesen und anschließend in einem Decodierer decodiert werden, der bei jedem Bitfehler einen Impuls an seinem Fehlerausgang abgibt.

Derartige Geräte, z B. CD-Spieler, magneto-optische Geräte zur Wiedergabe und Aufzeichnung, Aufzeichnungs-und Wiedergabegeräte für Draw-discs oder Videoplattenspieler, sind mit einem optischen Abtastsystem, bestehend aus einer Laserdiode, mehreren Linsen, einem Prismenstrahlteiler und einem Photodetektor, ausgestattet Aufbau und Funktion eines optischen Abtastsystems, eines sogenannten optical pick-ups, sind in Electronic components & applications, Vol.6, No.4, 1984 auf Seite 209-215 beschrieben.

Der von der Laserdiode ausgesendete Lichtstrahl wird mittels Linsen auf die CD-Platte fokusiert und von dort auf einen Photodetektor reflektiert. Aus dem Ausgangssignal des Photodetektors werden die auf der CD-Platte gespeicherten Daten und der Ist-Wert für den Fokus-und für den Spurregelkreis gewonnen. In der genannten Literaturstelle wird der Ist-Wert für den Fokusregelkreis als focusing error bezeichnet, während für den Ist-Wert des Spurregelkreises der Ausdruck radial tracking error gewählt ist.

Als Stellglied für den Fokusregelkreis dient eine Spule, über deren Magnetfeld eine Objektivlinse entlang der optischen Achse bewegbar ist Der Fokusregelkreis bewirkt nun durch Verschieben der Objektivlinse, daß der von der Laserdiode ausgesendete Lichtstrahl stets auf die CD-Platte fokusiert wird Mittels des Spurregelkreises, der oft auch als Radialantrieb bezeichnet wird, ist das optische Abtastsystem bezüglich der CD-Platte in radialer Richtung verschiebbar. Dadurch kann der Lichtstrahl auf den spiralförmigen Datenspuren der CD-Platte geführt werden.

Bei einigen Geräten ist der Radialantrieb aus einem sogenannten Grob-und einem sogenannten Feinantrieb aufgebaut Der Grobantrieb ist beispielsweise als Spindel ausgeführt, mittels der das gesamte optische Abtastsystem aus der Laserdiode, den Linsen, dem Prismenstrahlteiler und dem Photodetektor radial verschiebbar ist. Mit dem Feinantrieb ist der Lichtstrahl in radialer Richtung um einen vorgebbaren kleinen winkel kippbar, so daß der Lichtstrahl allein durch diese Kippbewegung ein kleines Stück entlang einem Radius der CD-Platte fahren kann. Mit anderen Worten ausgedrückt heißt dies, daß mittels des Feinantriebs die bezüglich der CD-Platte radiale Vektorkomponente des Lichtstrahls verändert wird. Dagegen ist der Winkel, unter dem der Lichtstrahl bezüglich der CD-Platte in tangentialer Richtung auf die CD-Platte trifft, fest zu 90° gewählt. Die Vektorkomponente des Lichtstrahls in tangentialer Richtung bezüglich der CD-Platte ist demnach null.

Wie bereits erwähnt, werden die vom Photodetektor gelieferten Datensignale in einem Decodierer decodiert, der bei jedem Bitfehler einen Impuls an seinem Fehlerausgang, dem C1F1-Ausgang abgibt.

Die Anzahl der Bitfehler hängt unter anderem auch von dem Winkel ab, unter dem der Lichtstrahl in tangentialer Richtung bezüglich der CD-Platte gesehen auf die CD-Platte trifft. Weil es sich bei einer CD-Platte aber nicht um eine vollkommen ebene kreisförmige, sondern um eine mit Toleranzen behaftete Scheibe handelt, ist der bei der Produktion des CD-Spielers eingestellte in tangentialer Richtung bezüglich der CD-Platte gesehene rechte Winkel des Lichtstrahls nicht für alle Abtastpunkte auf der CD-Platte optimal. Dadurch wird die Anzahl der Bitfehler vergrößert.

Es ist deshalb Aufgabe der Erfindung, bei einem Gerät zur Wiedergabe von Daten die Bitfehlerrate zu verringern.

Die Erfindung löst diese Aufgabe dadurch, daß aus der Bitfehlerrate ein Steuersignal für ein Stellglied gewonnen wird, mittels dem die bezüglich des Aufzeichnungsträgers tangentiale Vektorkomponente des Lichtstrahls veränderbar ist.

Es zeigen

Figur 1 ein erstes Ausführungsbeispiel der Erfindung

Figur 2 ein zweites Ausführungsbeispiel der Erfindung

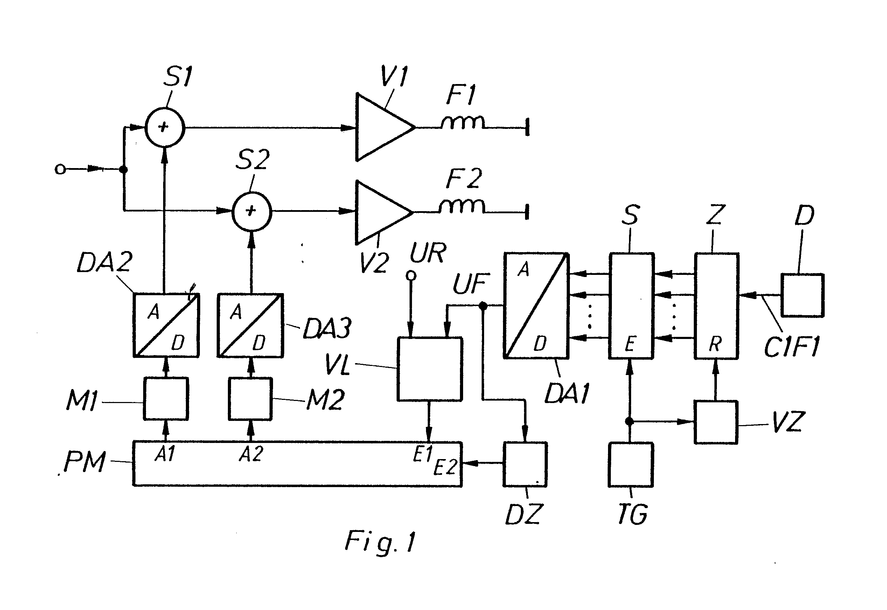

Anhand des in Figur 1 abgebildeten Ausführungsbeipsiels wird die Erfindung beschrieben und anschließend erläutert.

In Figur 1 ist der sogenannte Fehlerausgang des Decodierers D, der bei jedem Bitfehler einen Impuls abgibt, mit dem Eingang eines Zählers Z verbunden, dessen Ausgänge mit den Eingängen eines Speichers S verbunden sind. Der Ausgang eines Taktgenerators TG ist unmittelbar mit dem Enable-Eingang E des Speichers S und über ein Verzögerungsglied VZ mit dem Rücksetzeingang R des Zählers Z verbunden. Die Ausgänge des Speichers S sind mit den Eingängen eines Digital-Analog-Wandlers DA1 verbunden. Der Ausgang des Digital-analog-wandlers DA1 ist mit dem Eingang eines Differenzierers DZ und mit dem ersten Eingang eines Vergleichers VL verbunden. an dessen zweitem Eingang eine Referenzspannung UR liegt. Der Ausgang des Vergleichers VL ist mit dem Eingang E1 und der Ausgang des Differenzierers DZ mit dem Eingang E2 einer Steuerschaltung PM, z.B. eines Mikroprozessors verbunden. Ein Ausgang A1 des Mikroprozessors PM ist mit dem Eingang eines Pulsbreitenmodulators M1 verbunden, dessen Ausgang mit dem Eingang eines Digital-Analog-Wandlers DA2 verbunden ist. Ein Ausgang A2 des Mikroprozessors PM ist mit dem Eingang eines Pulsbreitenmodulators M2 verbunden, dessen Ausgang mit dem Eingang eines Digital-Analog-Wandlers DA3 verbunden ist. Der Ausgang des Digital-Analog-Wandlers DA2 ist mit dem ersten Eingang einer Summationsstelle S1 verbunden, deren Ausgang mit dem Eingang eines Verstärkers V1 verbunden ist, während der Ausgang des Digital-Analog-Wandlers DA3 mit dem ersten Eingang einer Summationsstelle S2 verbunden ist, deren Ausgang mit dem Eingang eines Verstärkers V2 verbunden ist. Der Ausgang des Verstärkers V1 ist mit einer Spule F1, der Ausgang des Verstärkers V2 mit einer Spule F2 verbunden. Die beiden Spulen F1 und F2 bilden das Stellglied, mittels dem der Winkel - im weiteren Verlauf als Tangentialwinkel bezeichnet - veränderbar ist, unter dem der Lichtstrahl bezüglich der CD-Platte in tangentialer Richtung gesehen auf die CD-Platte trifft. Weil das Stellglied für den Fokusregelkreis ebenfalls als Spule ausgeführt ist, läßt sich, wie in Figur 1 gezeigt ist, die Spule des Fokusregelkreises gleichzeitig als Stellglied zur Einstellung des Tangentialwinkels verwenden, wenn die Spule symmetrisch aus zwei Hälften aufgebaut ist; deshalb wird dem ersten Eingang der Summationsstellen S1 und S2 der Ist-Wert für den Fokusregelkreis, der focusing error, zugeführt.

Es wird nun die Funktion der Erfindung erläutert.

Bei jedem Bitfehler gibt der Decodierer D einen Zählimpuls an den Zähler Z ab, dessen Zählerstand im Anfangszustand null beträgt, so daß mit jedem Bitfehler sein Zählerstand um eins erhöht wird. Der Taktgenerator TG setzt nun den Zähler Z durch einen Impuls am Rücksetzeingang periodisch zurück. Gleichzeitig gibt der Taktgenerator TG aber auch diesen Impuls an den Enable-Eingang des Speichers S, der dadurch seinen Inhalt an den Digital-Analog-Wandler DA1 abgibt, um den Zählerstand des Zählers Z zu übernehmen. Der vom Taktgenerator TG erzeugte Impuls wird dem Enable-Eingang des Speichers S unverzögert, dem Rücksetzeingang R des Zählers Z dagegen infolge des Verzögerungsgliedes VZ verzögert zugeführt, damit der Speicher S den Zählerstand des Zählers Z übernehmen kann, ehe er zurückgesetzt wird. Im Digital-Analog-Wandler DA1 wird jeweils der Zählerstand des Zählers Z, der zur Bitfehlerrate, der Anzahl der Bitfehler in der Zeit zwischen zwei aufeinanderfolgenden Impulsen des Taktgenerators TG, proportional ist, in eine analoge Spannung UF umgewandelt, die deshalb ebenfalls in einem proportionalen Verhältnis zur Bitfehlerrate steht.

Solange die analoge Spannung UF am Ausgang des Digital-Analog-Wandlers DA1, im weiteren Verlauf als Meßspannung bezeichnet, kleiner als die Referenzspannung UR bleibt, wird der Tangentialwinkel nicht verändert. Erst wenn die Bitfehlerrate soweit ansteigt, daß die Meßspannung UF größer wird als die Referenzspannung UR, ändert der Vergleicher VL sein Ausgangssignal, an dem der Mikroprozessor PM nun erkennt, daß die Bitfehlerrate zu groß ist. Jedoch ist an der Meßspannung UF nicht erkennbar, in welche Richtung der Tangentialwinkel geändert werden muß, um die Bitfehlerrate zu senken Deshalb bewirkt der Mikroprozessor PM über je ein Signal an seinen Ausgängen A1 und A2, daß die Pulsbreitenmodulatoren M1 und M2 impulsförmige Signale abgeben, die durch die Digital-Analog-Wandler DA2 und DA3 gewandelt den Spulen F1 und F2 zugeführt werden. Die Spulen F1 und F2, das Stellglied für den Tangentialwinkel, bewirken nun, daß der Tangentialwinkel zunächst in die eine Richtung verändert wird. Stellt der Differenzierer DZ während eines vorgebbaren Zeitintervalls, z.B. während der folgenden zwei Takte des Taktgenerators TG fest, daß die Bitfehlerrate sinkt, so wird der Tangentialwinkel in der gleichen Richtung weiter verstellt, bis der Vergleicher VL dem Mikroprozessor PM anzeigt, daß die Meßspannung UF unter die Referenzspannung UR gesunken ist.

Stellt der Differenzierer DZ innerhalb des vorgebbaren Zeitintervalls dagegen fest, daß die Bitfehlerrate nicht sinkt, so nimmt der Mikroprozessor PM an, daß er den Tangentialwinkel in die falsche Richtung verstellt hat. Er gibt deshalb an seinen Ausgängen A1 und A2 solange Signale ab, die eine Verstellung des Tangentialwinkels in die andere Richtung bewirken, bis die Meßspannung UF unter die Referenzspannung sinkt.

Durch diese Maßnahmen wird der Tangentialwinkel, der Winkel unter dem der Lichtstrahl in tangentialer Richtung bezüglich der CD-Platte gesehen auf die CD-Platte fällt, stets so verändert, daß die Bitfehlerrate unter einen vorgebbaren Schwellwert sinkt. Unebenheiten auf der CD-Platte verursachen deshalb nicht mehr wie bei einem CD-Spieler, bei dem der Tangentialwinkel fest eingestellt ist, eine wesentliche Erhöhung der Bitfehlerrate. Für den Hörer zeigt sich dieser Erfolg in einer besseren Tonwiedergabe.

Der Vergleicher VL, der Zähler Z, der Speicher S, der Differenzierer DZ und der Digital-Analog-Wandler DA1 können auch im Mikroprozessor PM realisiert sein. Ausserdem bietet der Mikroprozessor PM die Möglichkeit, den Tangentialwinkel solange zu verstellen, bis die Bitfehlerrate ein Minimum annimmt. In diesem Fall dient das Signal am Ausgang des Vergleichers VL nur dazu, die Verstellung des Tangentialwinkels einzuleiten; der Regelvorgang wird aber nicht bereits beendet, sobald die Meßspannung UF unter die Referenzspannung UR sinkt, sondern erst, wenn der Differenzierer DZ feststellt, daß die Meßspannung UF und damit die Bitfehlerrate ein Minimum annehmend nicht mehr weiter abnimmt. Damit wird eine weitere Verbesserung der Tonwiedergabe erzielt.

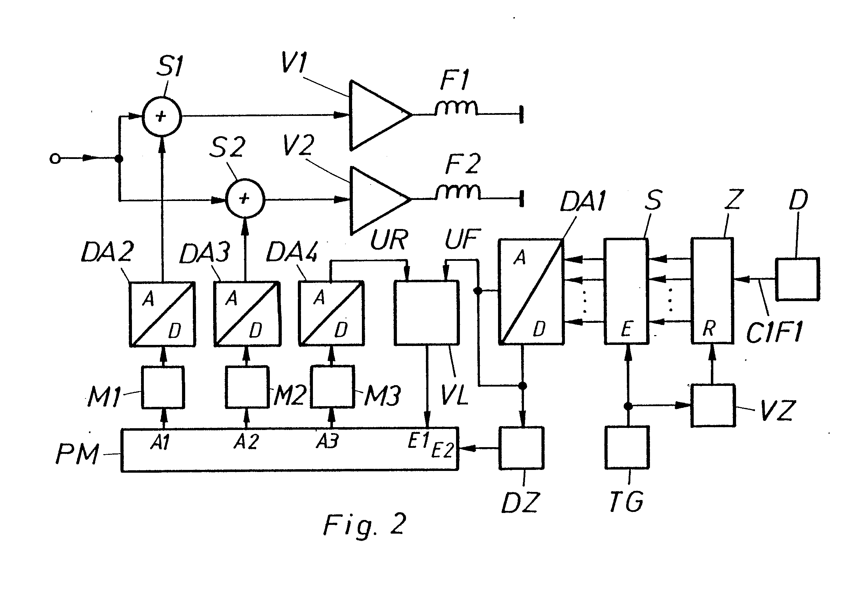

In Figur 2 ist ein weiterers Ausführungsbeispiel gezeigt, das sich von den anderen dadurch unterscheidet, daß ein Ausgang A3 des Mikroprozessors PM mit dem Eingang eines Pulsbreitenmodulators M3 verbunden ist. Dessen Ausgang ist mit dem Eingang eines Digital-Analog-Wandlers DA4 verbunden, an dessen Ausgang die Referenzspannung UR für den zweiten Eingang des Vergleichers VL abnehmbar ist. Das hat den Vorteil, daß die Schwelle, bei welcher mit dem Regeln des Tangentialwinkels begonnen wird, einstellbar ist. Mit anderen Worten ausgedrückt heißt dies, daß die Empfindlichkeit des Regelkreises zur Regelung des Tangentialwinkels eingestellt werden kann.

Die Erfindung ist nicht nur für CD-Spieler und Videoplatten spieler geeignet, sie läßt sich auch bei magneto-optischen Aufzeichnungs-und Wiedergabegeräten verwirklichen, mit denen wie bei einem Tonbandgerät Daten beliebig oft aufgezeichnet, wiedergegeben und gelöscht werden können. Auch Aufzeichnungsund Wiedergabegeräte für Draw-Discs kommen in Frage, die allerdings ähnlich wie ein PROM nur eine einmalige Aufzeichnung von Daten erlauben Löschen und erneutes Aufzeichnen oder Überschreiben der ursprünglichen Daten ist nicht möglich.

**Ansprüche**

1. Gerät zur Wiedergabe und gegebenenfalls auch Aufzeichnung von Daten, die mittels eines optischen Abtastsystems durch Führen eines Lichtstrahls entlang den Datenspuren eines sich drehenden plattenförmigen Aufzeichnungsträgers gelesen und anschließend in einem Decodierer (D) decodiert werden, der bei jedem Bitfehler einen Impuls an seinem Fehlerausgang abgibt, **dadurch gekennzeichnet**, daß aus der Bitfehlerrate ein Steuersignal für ein Stellglied (F1, F2) gewonnen wird, mittels dem die bezüglich des Aufzeichnungsträgers tangentiale Vektorkomponente des Lichtstrahls veränderbar ist.

2. Gerät nach Anspruch 1, **dadurch gekennzeichnet**, daß der Fehlerausgang des Decodierers (D) mit dem Eingang eines Zählers (Z) verbunden ist, der periodisch zurückgesetzt wird und dessen Zählerstand mit einer Referenzgroße (UR) verglichen wird, und daß aus dem Vergleich das Steuersignal für das Stellglied (F1, F2) abgeleitet wird.

3. Gerät nach Anspruch 2, **dadurch gekennzeichnet**, daß der Zählerstand des Zählers (Z) in eine analoge Spannung (UF) umgewandelt und mit einer Referenzspannung (UR) in einem Vergleicher (VL) verglichen wird.

4. Gerät nach Anspruch 3, **dadurch gekennzeichnet**, daß der Ausgang des Vergleichers (VL) mit einem Regler (V1, V2) verbunden ist, dessen Ausgang mit dem Stellglied (F1, F2) verbunden ist.

5. Gerät nach Anspruch 4, **dadurch gekennzeichnet**, daß der Regler (V1, V2) mittels des Stellgliedes (F1, F2) solange die tangentiale Vektorkomponente des Lichtstrahls ändert, bis die analoge Spannung (UF) unter die Referenzspannung (UR) sinkt.

6. Gerät nach Anspruch 2, 3, 4 oder 5, **dadurch gekennzeichnet**, daß die Referenzgröße (UR) veränderbar ist.

7. Gerät nach Anspruch 4 oder 5, **dadurch gekennzeichnet**, daß der Fehlerausgang des Decodierers (D) mit dem Zähler (Z) verbunden ist, dessen Ausgänge mit den Eingängen eines Speichers (S) verbunden sind, daß die Ausgänge des Speichers (S) mit den Eingängen eines ersten Digital-Analog-Wandlers (DA1) verbunden sind, daß der Ausgang eines Taktgenerators (TG) unmittelbar mit dem Enable-Eingang (E) des Speichers (S) und über ein Verzögerungsglied (VZ) mit dem Rücksetzeingang (R) des Zählers (Z) verbunden ist, daß der Ausgang des ersten Digital-Analog-Wandlers (DA1) mit dem ersten Eingang eines Vergleichers (VL) und mit dem Eingang eines Differenzierers (DZ) verbunden ist, daß der Ausgang des Vergleichers (VL), an dessen zweitem Eingang die Referenzspannung (UR) liegt, mit dem ersten Eingang (E1) einer Steuerschaltung (PM) verbunden ist, daß der Ausgang des Differenzierers (DZ) mit dem zweiten Eingang (E2) der Steuerschal tung (PM) verbunden ist, daß der erste Ausgang (A1) der Steuerschaltung (PM) mit dem Eingang eines ersten Pulsbreitenmodulators (M1) verbunden ist, dessen Ausgang mit dem Eingang eines zweiten Digital-Analog-Wandlers (DA2) verbunden ist, daß der zweite Ausgang (A2) der Steuerschaltung (MP) mit dem Eingang eines zweiten Pulsbreitenmodulators (M2) verbunden ist, dessen Ausgang mit dem Eingang eines dritten Digital-Analog-Wandlers (DA3) verbunden ist, daß der Ausgang des zweiten Digital-Analog-Wandlers (DA2) mit dem ersten Eingang einer ersten Summationsstelle (S1) verbunden ist, deren Ausgang mit dem Eingang eines ersten Verstärkers (V1) verbunden ist, daß der Ausgang des dritten Digital-Analog-Wandlers (DA3) mit dem ersten Eingang einer zweiten Summationsstelle (S2) verbunden ist, deren Ausgang mit dem Eingang eines zweiten Verstärkers (V2) verbunden ist. und daß die Ausgänge des ersten und des zweiten Verstärkers (V1, V2) mit dem Stellglied (F1, F2) verbunden sind.

8. Gerät nach Anspruch 7. **dadurch gekennzeichnet**, daß der dritte Ausgang (A3) der Steuerschaltung (PM) mit dem Eingang eines dritten Pulsbreitenmodulators (M3) verbunden ist, dessen Ausgang mit dem Eingang eines vierten Digital-Analog-Wandlers (DA4) verbunden ist, und daß der Ausgang des vierten Digital-Analog-Wandlers (DA4) mit dem zweiten Eingang des Vergleichers (VL) verbunden ist.

9. Gerät nach Anspruch 7 oder 8, **dadurch gekennzeichnet**, daß für die Steuerschaltung (PM) ein Mikroprozessor vorgesehen ist.

Fig.1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A-2 016 744 (N.V. PHILIPS' GLOEILAMPENFABRIEKEN) <br> * Seite 7, Zeilen 25-99; Seite 9, Zeilen 81-125; Figuren 7,8 * <br> --- | 1,2,6 | G 11 B 7/08 <br> G 11 B 7/09 |
| Y | EP-A-0 095 766 (HITACHI LTD) <br> * Seite 6, Zeilen 6-15; Seite 8, Zeile 19 - Seite 13, Zeile 4; Seite 13, Zeile 27 - Seite 14, Zeile 5; Seite 14, Zeile 25 - Seite 18, Zeile 17; Seite 23, Zeilen 17-25; Seite 25, Zeile 18 - Seite 26, Zeile 20; Seite 27, Zeile 16 - Seite 29, Zeile 17 * | 1,2,6 | |
| A | --- | 7,9 | |
| A | PATENT ABSTRACTS OF JAPAN, Band 11, Nr. 40 (P-544)[2487], 5. Februar 1987; & JP-A-61 208 634 (MITSUBISHI ELECTRIC CORP.) 17-09-1986 <br> * Zusammenfassung * <br> --- | 1,2,7,9 | |
| A | PATENT ABSTRACTS OF JAPAN, Band 11, Nr. 100 (P-561)[2547], 28. März 1987; & JP-A-61 250 842 (MITSUBISHI ELECTRIC CORP.) 07-11-1986 <br> * Zusammenfassung * <br> --- | 1,2,4,7 ,9 | **RECHERCHIERTE SACHGEBIETE (Int. Cl.4)** <br><br> G 11 B |
| A | PATENT ABSTRACTS OF JAPAN, Band 7, Nr. 196 (P-219)[1341], 26. August 1983; & JP-A-58 94 139 (MATSUSHITA DENKI SANGYO K.K.) 04-06-1983 <br> * Zusammenfassung * <br> --- | 1,7 | |
| A | GB-A-2 113 947 (RCA CORP.) <br> * Seite 2, Zeilen 31-44 * <br> ---      -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 10-05-1988 | DAALMANS F.J. |

EPO FORM 1503 03.82 (P0403)

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | ELECTRONICS & WIRELESS WORLD, Band 91, Nr. 1594, August 1985, Seiten 52-55, London, GB; J.R. WATKINSON: "Compact disc players" * Insgesamt * | 1 | |
| D,A | ELECTRONIC COMPONENTS & APPLICATIONS, Band 6, Nr. 4, 1984, Seiten 209-215, Eindhoven, NL; J. NIJHOF: "An integrated approach to CD players - part 1: The optical pick-up" * Insgesamt * | 1 | |
| | | | **RECHERCHIERTE SACHGEBIETE (Int. Cl.4)** |

Der vorliegende Recherchenbericht wurde für alle Patentansprüche erstellt

| Recherchenort | Abschlußdatum der Recherche | Prüfer |
|---|---|---|
| DEN HAAG | 10-05-1988 | DAALMANS F.J. |

# ANHANG ZUM EUROPÄISCHEN RECHERCHENBERICHT
## ÜBER DIE EUROPÄISCHE PATENTANMELDUNG NR.

EP 88 10 1915

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am 15/06/88
Diese Angaben dienen nur zur Unterrichtung und erfolgen ohne Gewähr.

| Im Recherchenbericht angeführtes Patentdokument | Datum der Veröffentlichung | Mitglied(er) der Patentfamilie | | Datum der Veröffentlichung |
|---|---|---|---|---|
| GB-A- 2016744 | 26-09-79 | NL-A- | 7802859 | 18-09-79 |
| | | FR-A- | 2420182 | 12-10-79 |
| | | DE-A,C | 2909877 | 27-09-79 |
| | | JP-A- | 54130102 | 09-10-79 |
| | | AU-A- | 4507879 | 20-09-79 |
| | | BE-A- | 874917 | 17-09-79 |
| | | US-A- | 4363116 | 07-12-82 |
| | | CA-A- | 1147058 | 24-05-83 |
| | | SE-A- | 7902222 | 17-09-79 |
| | | AT-B- | 372798 | 10-11-83 |
| | | AU-B- | 535698 | 05-04-84 |
| | | CH-B- | 648947 | 15-04-85 |
| | | SE-B- | 439706 | 24-06-85 |
| | | SE-A- | 8500720 | 15-02-85 |
| | | JP-A- | 62167622 | 24-07-87 |
| | | JP-A- | 62167623 | 24-07-87 |
| | | JP-A- | 62167627 | 24-07-87 |
| | | CH-B- | 664452 | 29-02-88 |
| EP-A- 0095766 | 07-12-83 | JP-A- | 58208973 | 05-12-83 |
| | | US-A- | 4580255 | 01-04-86 |
| | | JP-A- | 58212663 | 10-12-83 |
| | | JP-A- | 58212632 | 10-12-83 |
| | | JP-A- | 59019249 | 31-01-84 |
| | | JP-A- | 59040377 | 06-03-84 |
| | | JP-A- | 59087668 | 21-05-84 |
| GB-A- 2113947 | 10-08-83 | JP-A- | 58120381 | 18-07-83 |
| | | FR-A,B | 2519499 | 08-07-83 |
| | | DE-A,C | 3248377 | 14-07-83 |
| | | US-A- | 4484174 | 20-11-84 |

EPO FORM P0461

Für nähere Einzelheiten zu diesem Anhang : siehe Amtsblatt des Europäischen Patentamts, Nr.12/82